(19) Europäisches Patentamt
European Patent Office
Office européen des brevets

(11) **EP 4 017 011 A1**

(12) **EUROPEAN PATENT APPLICATION**

(43) Date of publication:
**22.06.2022 Bulletin 2022/25**

(21) Application number: **20306569.3**

(22) Date of filing: **15.12.2020**

(51) International Patent Classification (IPC):
**H04N 19/615** (2014.01)    **H04N 19/625** (2014.01)
**H04N 19/80** (2014.01)    **H04N 19/85** (2014.01)

(52) Cooperative Patent Classification (CPC):
**H04N 19/85; H04N 19/615; H04N 19/625;
H04N 19/80**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ATEME**
**78140 Velizy Villacoublay (FR)**

(72) Inventor: **GUIONNET, Thomas**
**35000 Rennes (FR)**

(74) Representative: **Plasseraud IP**
**66, rue de la Chaussée d'Antin**
**75440 Paris Cedex 09 (FR)**

(54) **METHOD AND APPARATUS FOR FILM GRAIN ESTIMATION AND CODING**

(57)    A method of processing an image is proposed, which comprises: generating a decoded image by first encoding the image, wherein the first encoding the image comprises decoding encoded data generated based on the image, determining estimates of parameters of a parametric model of noise contained in the image based on the decoded image, including the estimates of parameters of the parametric model of noise in an encoded stream generated by second encoding the image.

**FIG. 5**

**Description**

The present disclosure relates to the field of image processing, in particular image encoding for video stream compression.

Film grain is usual in old motion pictures dating from the times movies were shot with a film camera. The grain, which was a result of chemical effects of the analog film used in the film camera, is no longer present in videos captured with a digital camera. Nevertheless it is common for film makers to add computer-generated grain in materials captured with a digital camera in order to reproduce the esthetic of old movies through the presence of film grain. In view of its random nature, grain present in an image can be modeled as an additive noise, and processed as such.

Video data is often source encoded so as to decrease the amount of resources necessary for its transmission and/or storage in memory. Various video coding or compression standards that have been developed over the recent years, such as H.264/AVC, H.265/HEVC or MPEG-2, may be used for that purpose.

Even though grain may have been added in post-production to a video content, such film grain is considered as part of the video data to be encoded or compressed likewise other components of the video data. However, due to its random nature, grain is difficult to compress with a good efficiency.

With a known video coding or compression scheme, preserving the grain requires a very high bitrate. Conversely, when using a reasonable bitrate, say for a broadcast use case, grain cannot be preserved properly. It is either washed out, or partly removed thus generating undesirable visual artefacts and temporal instability.

Therefore it is desirable to improve the efficiency of video encoding/compression of video data that includes grain by preserving the grain information during the encoding/compression, while preserving performance of the encoder (encoding gain).

There is therefore a need for providing an improved video processing scheme and video encoder and/or decoder implementing the same that address at least some of the above-described drawbacks and shortcomings of the conventional technology in the art.

It is an object of the present subject disclosure to provide an improved video processing scheme and apparatus implementing the same.

Another object of the present subject disclosure is to provide an improved video encoding or compression and/or video decoding or decompression scheme and apparatuses implementing the same.

Another object of the present subject disclosure is to provide an improved video encoding and/or decoding scheme and apparatuses implementing the same for alleviating the above-described drawbacks and shortcomings of conventional video encoding/decoding schemes, in particular with respect to video encoding/decoding schemes of an input video stream to be encoded that contains film grain and/or random noise.

To achieve these objects and other advantages and in accordance with the purpose of the present subject disclosure, as embodied and broadly described herein, in one aspect of the present subject disclosure, a method of processing an image, a digital video frame, or more generally digital video data, is proposed. The proposed method comprises: generating a decoded image by first encoding the image, wherein the first encoding the image comprises decoding encoded data generated based on the image; determining estimates of parameters of a parametric model of noise contained in the image based on the decoded image; and including the estimates of parameters of the parametric model of noise in an encoded stream generated by second encoding the image.

The proposed scheme advantageously avoids the use of a denoised image, so that it alleviates the drawbacks of using denoising for encoding an image. Instead, noise model parameters are computed using the input image and a decoded image obtained through the decoding of an encoded version of the input image. As image coding algorithms that use predictive coding typically use decoded image data determined by decoding an encoded version of an input image, the proposed process advantageously leverages processing operations which are part of most encoding schemes. Instead of being used only for purposes of encoding an input image, the decoded image determined as part of encoding the input image may according to the present subject disclosure also be used for purposes of determining estimates of parameters of a noise model for the input image.

Avoiding the use of a denoising scheme significantly decreases the computation complexity of the processing of the image, which may particularly be advantageous in the context of video encoding, where it is desirable to decrease the encoding latency and/or complexity.

In one or more embodiments, the including the estimates of parameters of the parametric model of noise in the encoded stream may comprise: inserting the estimates of parameters of the parametric model of noise in the encoded stream. Alternatively, the including the estimates of parameters of the parametric model of noise in the encoded stream may comprise: updating default noise parameters comprised in the encoded stream.

In one or more embodiments, the including the estimates of parameters of the parametric model of noise in the encoded stream may be performed as part of the second encoding of the image.

In one or more embodiments, the second encoding may be performed according to encoding parameters that are different from the encoding parameters according to which the first encoding is performed.

In one or more embodiments, the first encoding and the second encoding may be performed as part of different encoding processing instances.

In one or more embodiments, the first encoding and the second encoding may be performed as part of a same encoding processing instance. In such embodiments, the encoding of the image may be performed by an encoder configured to output the encoded stream further to the encoding of the image and to output the decoded image further to the encoding of the image.

In one or more embodiments, the parametric model may be configured to model grain contained in the image.

In one or more embodiments, the second encoding may be performed according to an AV1 or AVC/H.264 encoding.

In another aspect of the present subject disclosure, an apparatus is proposed, which comprises a processor, and a memory operatively coupled to the processor, wherein the apparatus is configured to perform a method as proposed in the present subject disclosure.

In one or more embodiments, the proposed apparatus may further be configured to perform the first encoding and the second encoding as part of a same encoding processing instance for encoding the image, and the apparatus may further be configured to output the encoded stream further to the encoding of the image and to output the decoded image further to the encoding of the image. In one or more embodiments, the apparatus may further be configured to perform the first encoding and the second encoding as part of a same encoding processing instance for encoding the image, and the apparatus may further be configured to output the encoded stream as part of the encoding processing instance and to output the decoded image as part of the encoding processing instance.

In one or more embodiments, the proposed apparatus may further comprise an encoder engine and a noise parameters computation engine, the encoder engine may be configured to perform the first encoding and the second encoding as part of a same encoding processing instance for encoding the image, the encoder engine may further configured to output the encoded stream as part of the encoding processing instance and to output the decoded image to the noise parameters computation engine as part of the encoding processing instance, and the noise parameters computation engine may be configured to determine the estimates of parameters of the parametric model of noise contained in the image based on the decoded image.

In one or more embodiments, the proposed apparatus may further comprise a noise parameters insertion and/or update engine operatively coupled with the encoder engine and the noise parameters computation engine, and configured to include in the encoded stream received from the encoder engine the estimates of parameters of the parametric model of noise contained in the image received from the noise parameters computation engine.

In other embodiments of the proposed apparatus, the noise parameters computation engine may be configured to output the estimates of parameters of the parametric model of noise contained in the image to the encoder engine, and the encoder engine may be configured to include in the encoded stream the estimates of parameters of the parametric model of noise contained in the image received from the noise parameters computation engine.

In yet another aspect of the present subject disclosure, a video encoder is proposed, which is configured to encode video content comprising a plurality of images, and comprises an apparatus as proposed in the present subject disclosure configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to process an image, a digital video frame, or more generally digital video data, by performing the generating, by the processor, a decoded image by first encoding the image, wherein the first encoding the image comprises decoding encoded data generated based on the image, the determining, by the processor, estimates of parameters of a parametric model of noise contained in the image based on the decoded image, and the including, by the processor, the estimates of parameters of the parametric model of noise in an encoded stream generated by second encoding the image.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1 is a block diagram illustrating an exemplary image encoder/decoder system on which the proposed methods may be implemented in accordance with one or more embodiments;

Figure 2 illustrates an AR model with a lag L = 2 that can be used to represent a noise pixel of a noise frame;

Figure 3 illustrates the selection of a patch (e.g. of size $32 \times 32$ pixels) at random coordinates in a grain template;

Figure 4 illustrates an exemplary process of successively generating grain pixels in a template;

Figure 5 is a block diagram illustrating an exemplary encoder in which the proposed image processing methods may be implemented in accordance with one or more embodiments;

Figure 6a is a block diagram illustrating an exemplary encoder in which the proposed image processing methods may be implemented in accordance with one or more embodiments;

Figure 6b is a block diagram illustrating an exemplary encoder in which the proposed image processing methods may be implemented in accordance with one or more embodiments;

Figure 7 illustrates an exemplary image processing method according to one or more embodiments of the present subject disclosure;

Figure 8 illustrates an exemplary apparatus or unit configured to use one or more image processing features in accordance with one or more embodiments of the present subject disclosure.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, units, engines, block diagrams and flowchart illustrations of the methods, systems, and computer program according to one or more exemplary embodiments. Each described function, unit, engine, block of the block diagrams and flowchart illustrations can be implemented in hardware, software, firmware, middleware, microcode, or any suitable combination thereof. If implemented in software, the functions, units, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

The methods proposed in the present subject disclosure may be implemented by any video encoder or video codec configured for encoding and/or decoding images (or frames) of input video data containing grain, film grain and/or noise, such as, for example a video encoder and/or decoder compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions, as the case may be adapted for implementing one or more embodiments of the proposed methods.

In the following, embodiments of the proposed methods, apparatuses and computer programs are described for the exemplary processing of grain in an image. However, it will be appreciated by those having ordinary skill in the relevant art that other types of noise in images or videos, such as, for example, sensor noise, may be processed in place of or in addition to the grain noise which is given by way of example only according to embodiments of the present subject disclosure.

In some conventional encoding/decoding schemes, such as specified for the AV1 video codec specified by the Alliance for Open Media (AOM), the grain information of an input image (for example of an input video) is not directly encoded, together with other data in the input image, but instead processed using an analysis/synthesis processing.

Using an analysis/synthesis method allows compressing grain through a parametric model. Once analyzing grain information in an input image has provided estimates of grain parameters, the grain can be removed from the input image prior to encoding such image using the chosen encoding scheme (e.g. AV1). The process of removing the grain is sometimes referred to as "denoising", and the image, video, or content from which the grain has been removed is referred to as "denoised". The efficiency of the encoding scheme can be preserved by only encoding the denoised input image or video, while the encoded stream resulting from the encoding of the input image or video comprises the compressed or encoded image or video, together with the corresponding grain parameters.

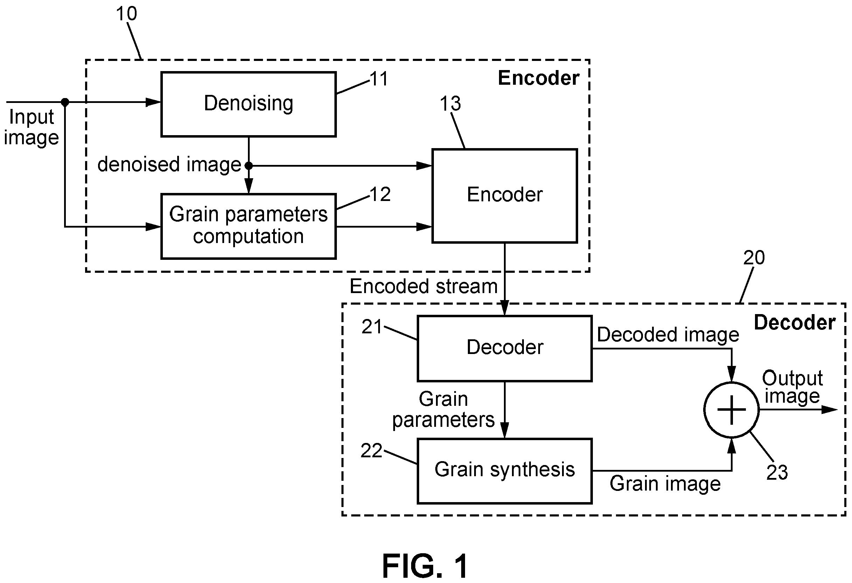

Fig. 1 shows an exemplary image encoder/decoder system which uses denoising of its input data prior to encoding such data.

Shown on Fig. 1 is an encoder 10 which comprises a denoising engine 11, a grain parameters computation engine 12, and an encoder engine 13. The encoder 10 is configured to receive an input image, which is provided as input to the denoising engine 11 and to the grain parameters computation engine 12. The denoising engine 11 is configured for removing the grain from the received input image data, which results in a generated denoised image. The denoised image is provided to the grain parameters computation engine 12 which is configured to, based on the input image data and the denoised input image data, compute grain parameters for the grain comprised in the input image data. The computation of grain parameters values or estimates can use an analysis part of an analysis/synthesis scheme operating on a model of the grain/noise, for example an auto-regressive parametric model.

As shown on Fig. 1, the denoised image is provided as input to the encoder engine 13, which also receives as input estimates of grain parameters computed by the grain parameters computation engine 12. The encoder engine 13 can be configured to process (e.g. encode or compress) the received denoised image data according to any image and/or video encoding scheme, such as, for example a video encoder compliant with any of the H.261, MPEG-1 Part 2, H.262, MPEG-2 Part 2, AV1, H.264/AVC, H.265/HEVC, MPEG-4 Part 2, SHVC (Scalable HEVC), and H.266/VVC, and MPEG-5 EVC standards. As a result, the encoder engine 13 may produce an encoded stream which comprises grain parameters estimates received from the grain parameters computation engine and encoded image data generated by itself based on the received denoised image. As a consequence, only the denoised video is compressed and sent to a channel along with the grain parameters.

Also shown on Fig. 1 is a decoder 20 which comprises a decoder engine 21 and a grain synthesis engine 22. The decoder engine 21 is configured to receive as input data the encoded stream produced by the encoder 10, and decode the encoded image data comprised in the encoded stream to generate a decoded image. The decoded image data is therefore generated based on the encoded image data resulting from the encoding of the denoised image. The decoder engine 21 may also be configured to extract from the received encoded stream grain parameters data, and provide such grain parameters data to the grain synthesis engine. The grain synthesis engine 22 is configured to, based on the grain parameters data, generate image grain data that correspond to the decoded image produced by the decoder engine 21. The computation of image grain data can use a synthesis part of the analysis/synthesis scheme operating on a model of the grain/noise that was used by the grain parameters computation engine 12 of the encoder. The decoded image data generated by the decoder engine 21 and the image grain data generated by the grain synthesis engine 22 are combined 23 to generate an output image which is output by the decoder 20.

That is, at the decoder side, the denoised image is decoded, and a synthetic noise pattern (e.g. a synthetic grain pattern) is generated based on the grain parameters estimated at the encoder side and combined with (for example added to) the decoded image. Therefore, contrary to the principles of image encoding/decoding which are based on fidelity of the decoded image to the input image to be encoded, the resulting noisy or grainy image or video is different from the source, while still being visually similar.

Some standard video codec specifications, such as, for example, the AV1 codec specification, define a syntax of grain parameters and specify a grain synthesis scheme to be used as normative/mandatory tools. As another example, the H.264/AVC standard defines an optional syntax for sending grain parameters along with encoded video data. In AV1 an auto-regressive model is considered, while in AVC/H.264, two different models are proposed, including an auto-regressive model.

Even though the following focuses on a non-limiting example based on the AV1 specification, a person of ordinary skill in the art would understand that the proposed processes, apparatuses and computer programs of the present subject disclosure may be implemented based on any video or image processing or coding standard or specification which addresses noise and/or grain processing in an image, in particular through a noise analysis/synthesis model, such as, for example, an auto-regressive (AR) model, and that such proposed processes, apparatuses and computer programs of the present subject disclosure are not limited to the use of any specific video or image processing or coding standard/specification, and in particular to AV1, which is provided as an example only. For example, the proposed processes, apparatuses and computer programs of the present subject disclosure may also be implemented using the AVC/H.264 auto-regressive model.

Further, even though the following focuses on a non-limiting example based on the AV1 specification which uses an AR parametric model, a person of ordinary skill in the art would understand that the proposed processes, apparatuses and computer programs of the present subject disclosure may be implemented based on any analysis/synthesis model suitable for modelling noise (e.g. grain), and that such proposed processes, apparatuses and computer programs of the present subject disclosure are not limited to the use of any specific noise model, and in particular to an AR parametric model for noise, which is provided as an example only.

In the present subject disclosure, reference is made to the AV1 specification which is available at the URL https://aomediacodec.github.io/av1-spec/av1-spec.pdf, and incorporated by reference in its entirety in the present subject disclosure.

As part of the analysis/synthesis scheme used therein for grain processing, the AV1 video codec specifications consider an auto-regressive (AR) process for modeling a film grain pattern of an input image, according to which each noise pixel is modelled by a random variable based on the noise pixels in a causal neighborhood. In AVC/H.264, two models are proposed, including an auto-regressive model. The grain model specified for AV1 assumes that each input video frame can be modelled as a combination (e.g. an addition) of a signal without noise and a noise frame (also referred to as a noise image) corresponding to a zero-average noise that follows an AR process. Each pixel of the noise frame can be modelled by a random variable which depends on random variables respectively associated with previously generated neighboring pixels of the noise frame.

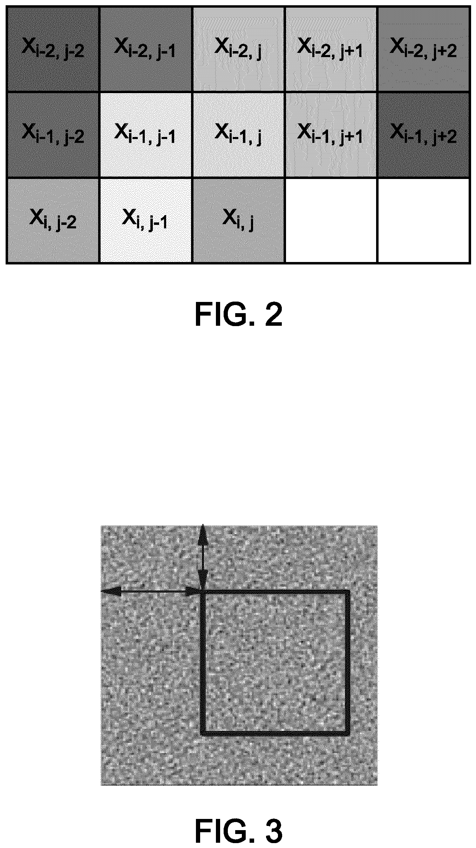

Figure 2 illustrates an AR model with a lag L = 2 that can be used to represent a noise pixel of a noise frame.

Figure 2 shows an array of noise pixels comprised in a noise frame, wherein each noise pixel is represented by a respective random variable X. For example, a current noise pixel at position $(i, j)$ in the array is represented by the random variable $X_{i,j}$. According to an AR model with lag L=2 (as illustrated in Figure 2), the random variable representing the noise pixel of interest may be expressed as a linear combination of previously synthesized pixels of a predefined neighborhood (in the example of Fig. 2, all previously synthesized pixels that are distant from the current pixel by two positions on the left and/or on the top of the current pixel) combined with a parameter corresponding to a Gaussian noise sample:

$$\begin{aligned} X_{i,j} = \varepsilon_{i,j} &+ \varphi_1 X_{i,j-1} + \varphi_2 X_{i,j-2} + \varphi_3 X_{i-1,j+2} + \varphi_4 X_{i-1,j+1} \\ &+ \varphi_5 X_{i-1,j} + \varphi_6 X_{i-1,j-1} + \varphi_7 X_{i-1,j-2} + \varphi_8 X_{i-2,j+2} \\ &+ \varphi_9 X_{i-2,j+1} + \varphi_{10} X_{i-2,j} + \varphi_{11} X_{i-2,j-1} + \varphi_{12} X_{i-2,j-2}, \end{aligned}$$

wherein $\varphi, ..., \varphi_p$ are the auto-regressive parametric noise model linear combination parameters, and $\varepsilon_{i,j}$ a random number following an independent identically distributed gaussian distribution of standard deviation a. Another parameter of the AR parametric noise model that may be used is one or more seeds of the pseudo-number generator usable for generating the random number $\varepsilon_{i,j}$. In some embodiments, the seed may be chosen at the encoder side and transmitted along with the auto-regressive parametric noise model linear combination parameters $\varphi_1, ..., \varphi_p$ and the standard deviation $\sigma$, to be used at the decoder side with a pseudo-random number generator, for example as specified by the AV1 codec specification.

In one or more embodiments, the parameters of the AR parametric noise model may therefore include the number P of linear combination coefficients ($\varphi_1, \varphi_2, \varphi_P$), linear combination coefficients ($\varphi_1, \varphi_2, ...,\varphi_P$), a standard deviation $\sigma$ or variance of the Gaussian noise to be used for drawing the random number $e_{i,j}$, and a seed value.

Based on these parameters, a current pixel value $X_{i,j}$ may be generated by adding a random value of a Gaussian noise of standard deviation $\sigma$ (generated based on the seed value) to a linear combination of the P pixel values previously generated for the P pixels in the causal neighborhood weighted by the linear combination coefficients ($\varphi_1, \varphi_2, ..., \varphi_P$).

The grain synthesis algorithm specified for AV1 has been defined with computing efficiency in mind. The computing cost of synthesizing a full-size grain image can indeed become high in the case of processing an ultra HD image. As such, the AV1 specification for grain synthesis at the decoder does not require generating grain pixels for the full pixel size of the image (or video frame) under consideration. Instead, a noise template (which may also be referred to as a noise "pattern") of a predetermined and smaller size than that of the image, e.g. of size 64 × 64 pixels, may be generated, and used as a template for generating noise patches of a smaller size, such as 32 × 32 pixels. A plurality of noise patches may be chosen at random coordinates in the 64 × 64 pixels noise template, and copied on the image which will have been previously divided into blocks of the same size as the noise patches (e.g. blocks of 32 × 32 pixels). Figure 3 illustrates the selection of a patch (e.g. of size 32 × 32 pixels) at random coordinates in a grain template (e.g. of size 64 × 64 pixels).

Therefore, advantageously, the noise of an image to be processed may be analyzed based on a noise template of a smaller size than that of the image, in order to lower the processing time and/or complexity of this aspect of the processing. For example, the noise of an image may be analyzed based on an analysis scheme applied to one or more 64 x 64 pixel noise templates determined based on the image.

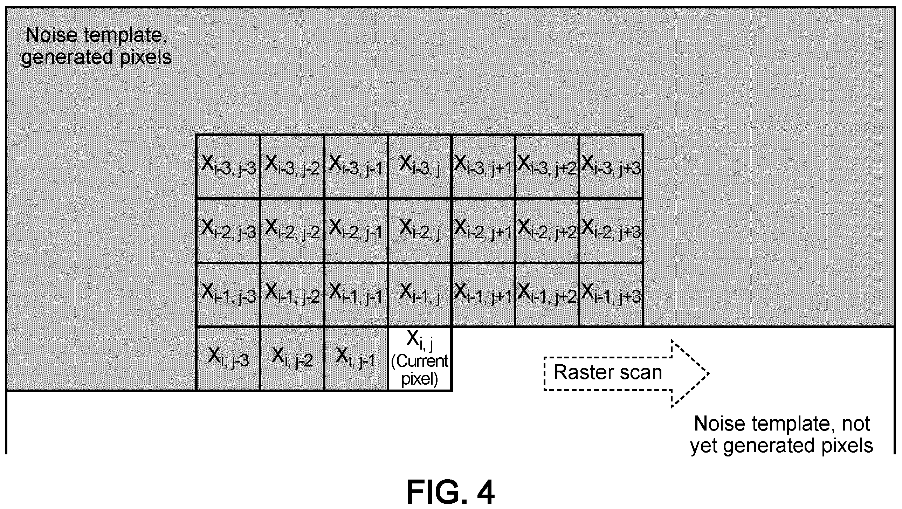

Figure 4 illustrates an exemplary process of successively generating grain pixels in the template with the largest possible pixel neighborhood (corresponding to a lag L = 3) for an autoregressive model, for example as defined by the AV1 specifications.

As illustrated on Fig. 4, a current noise pixel represented by a random variable $X_{i,j}$ may be computed according to a lag L = 3 AR model based on the values of random variables representing pixels in the neighborhood of the current pixel located in the array of noise pixels represented on Fig. 4 at a distance of up to 3 pixels from the current pixel.

A processing sequence for grain processing, at the encoder (analysis) or at the decoder (synthesis), the grain pixels of the image may define a sequence according to which grain pixels are analyzed/synthesized one after another. Because the pixels of the image may be analyzed at the encoder according to a predetermined sequence to determine the grain model parameters, the grain pixels may be synthesized at the decoder according to the same processing sequence. For example, a raster scan sequence may scan the pixels of the image starting from the pixel located at the leftmost upper corner of the image (represented by a pixel matrix), and progress to the pixel adjacent to the previously scanned pixel located to the right. At the end of a line of pixels, the sequence proceeds to the next line scanning the pixels from the left to the right. An image divided into blocks may be scanned in the same manner, with blocks being processed according to the processing sequence instead of pixels.

As discussed above, a noise template can therefore be progressively generated according to a processing sequence of grain analysis/synthesis, such as a raster scan sequence as illustrated on Fig. 4.

Further, the AV1 specifications provide that the grain parameters can be adjusted as a function of the luminance, to better model the behavior of actual film grain. For instance, film grain tends to be less prominent at high luminance, compared to medium luminance. AV1 allows specifying several luminance intervals and then send a scaling factor per luminance interval, from which a piecewise linear scaling function can be obtained. Although not specifically mentioned in the remaining of this document, the proposed methods, apparatuses and computer programs are compatible with this feature.

Although the above-described analysis/synthesis scheme provides a good solution to the grain compression problem, the synthesis algorithm defined in the AV1 specification has some drawbacks due to the use of a noise template based on which a grain image is generated by pixel-copying of noise patches randomly selected in the noise template.

Various methods have been developed for estimating the grain parameters when using an AR model for the grain, that is, estimating the AR model parameters (including the AR model linear combination parameters ($\varphi_1$, ..., $\varphi_P$) and AR model variance parameter ($\sigma$)). For example, the Yule-Walker method may be used, as this method is well suited for the estimation of AR model parameters, its complexity is reasonable, and it usually provides satisfactory results.

Conventional grain analysis methods have in common the use of denoising or, as the case may be, a "de-graining" to generate a denoised image such as illustrated in Fig. 1, so that video data that is fed to the encoder engine is not the received input image data, but the input image data modified by denoising.

This functional architecture requires implementing a preprocessing engine for denoising, which has a cost in terms of computing resources.

In addition, the efficiency of a conventional grain analysis method that uses denoising typically relies heavily on the efficiency of the denoising operation. As a consequence, if the denoising of the original image is not efficient enough, the remaining noise in the denoised image impairs the accuracy of the grain parameters estimation. As a result, the grain strength may be underestimated, which may lead to unsatisfactory grain restitution for the end-user. Further, some denoisers may generate undesirable artifacts in the original image signal, such as softness. Moreover, highly accurate denoisers are very complex and involve high CPU usage.

The present subject disclosure provides image processing methods that address these drawbacks of conventional grain analysis methods, and proposes a new paradigm for grain parameters estimation which offers specific advantages as described below.

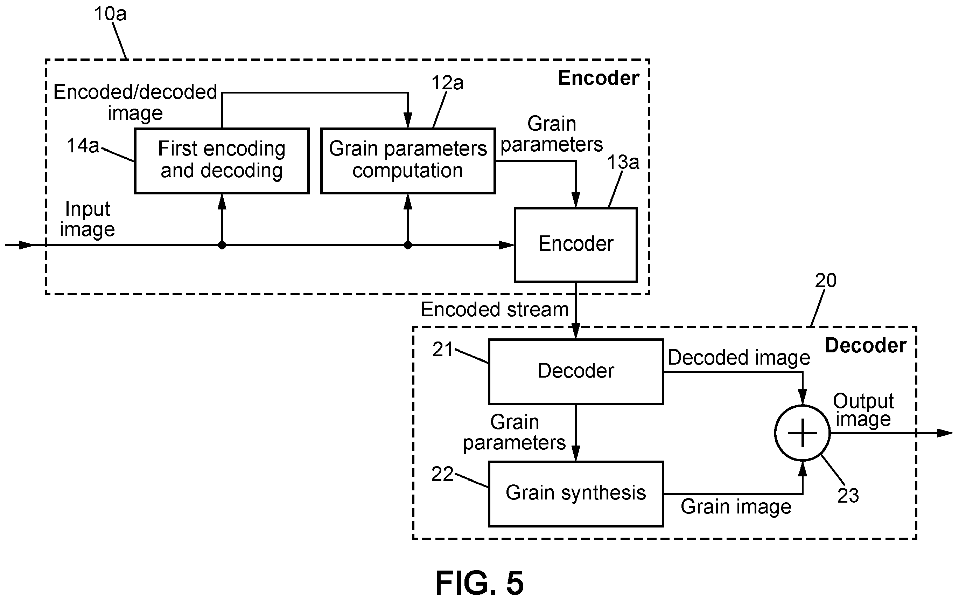

Fig. 5 shows an exemplary encoder 10a configured for implementing embodiments of the proposed image processing method according to the present subject disclosure.

As shown in Fig. 5, the improved encoder 10a may comprise engines or functions that are similar to those comprised in the encoder 10 illustrated on Fig. 1: the encoder 10a may comprise a grain parameters computation engine 12a and an encoder engine 13a which provide functions similar to those of the corresponding engines illustrated on Fig. 1 (except, with respect to the grain parameters computation engine 12 of Fig. 1, that the grain parameters computation engine 12a is configured to operate on decoded image data and input image data as input data instead of denoised image data and input image data). In contrast to the encoder 10 of Fig. 1, the improved encoder 10a may not include a denoising engine, which can advantageously alleviate the need for a preprocessing engine at the encoder 10a for the denoising function, leading to a significant decrease in computation complexity at the encoder side. Instead, the encoder 10a may comprise a first encoding and decoding engine 14a. The first encoding and decoding engine 14a may be configured to receive an input image received by the encoder 10a, and to generate a decoded image by first encoding the input image. In one or more embodiments, the first encoding of the input image may comprise decoding encoded data generated based on the input image. In some embodiments, the first encoding of the input image may be performed according to a conventional encoding scheme which generates a decoded image based on encoded data, for example according to a standard video codec specification, such as H.261, MPEG-1 Part 2, H.262, MPEG-2 Part 2, AV1, H.264/AVC, H.265/HEVC, MPEG-4 Part 2, SHVC (Scalable HEVC), and H.266/VVC, and MPEG-5 EVC standards. Such a conventional encoding scheme may typically involve dividing the input image into a set of blocks and encoding the blocks according to a block encoding sequence. The encoding of a block may comprise the generating encoded data based on the block, for example according to a predictive coding algorithm, with the encoded data being generated based on previously encoded then decoded blocks or images. That is, in some embodiments, a decoded image resulting from the decoding of an encoded version of the input image may typically be generated as part of an encoding scheme using predictive coding implemented by the first encoding and decoding engine 14a for generating a decoded image. The first encoding and decoding engine 14a may then be configured in one or more embodiments for generating a decoded image which results from the decoding of an encoded image generated by encoding the input image.

In some embodiments, the first encoding and decoding engine 14a may perform operations that are similar to the operations performed by the encoder engine 13a with respect to the encoding to generate encoded data followed by the decoding of the encoded data.

In some embodiments, the computation complexity of operations performed by the first encoding and decoding engine 14a and/or the processing latency induced by the first encoding and decoding engine 14a may advantageously be reduced by using at the first encoding and decoding engine 14a an encoding algorithm which is faster and/or of lower quality than the encoding algorithm used at the encoder engine 13a of the encoder 10a.

As illustrated on Fig. 5, the decoded image data output by the first encoding and decoding engine 14a may be fed to the grain parameters computation engine 12a, in place of the denoised image output by the denoising engine 11 shown on Fig. 1. The grain parameters computation engine 12a may receive as input the decoded image data and the input image data, and may be configured to use the decoded image data to determine estimates of parameters of a parametric model of noise contained in the input image.

In embodiments in which the noise model used for modelling the grain is an AR parametric model, the grain parameters data may include data corresponding to linear combination parameters ($\varphi_1$, $\varphi_2$, ..., $\varphi_P$), noise variance (or, depending on the embodiment, standard deviation) parameter ($\sigma$), and seed parameter of the AR model.

As discussed above, the grain parameters computation engine 12a may perform operations that are similar to that described in relation to the grain parameters computation engine 12 of Fig. 1, although in contrast to the grain parameters computation engine 12 of Fig. 1, operations for determining grain parameters (according to a grain parametric model) may be performed on the decoded image data instead of on the denoised image data.

In one or more embodiments, the first encoding and decoding engine 14a may be configured to operate on the input image as a denoiser according to a noise model, and as such output data that represents an estimate of the noise according to the model. For example, in some embodiments, the first encoding and decoding unit 14a may be configured as a video encoder which operates as a motion compensated temporal filter (MCTF). MCTF is a technology which is widely accepted as an efficient denoising scheme. In some embodiments, the use of MCTF may advantageously be combined with scaling of the transformed coefficients (obtained in the encoding loop by applying a transform on pixel residuals) in order to provide a finer control of the denoising of the input image.

As will be appreciated by the skilled person, the use of a first encoding and decoding engine 14a that is different from the main encoder engine 13a advantageously provides some flexibility to chose an encoding scheme used at the first encoding and decoding unit 14a, which may be different from the encoding scheme used at the main encoder engine 13a. This flexibility may advantageously be leveraged by choosing an encoding algorithm used at the first encoding and decoding unit 14a that is better suited for providing desired performances for the grain parameters estimation given other constraints (e.g. latency, computation complexity, etc.) imposed on the encoder side. For example, as discussed above, this flexibility may be leveraged by choosing an encoding algorithm used at the first encoding and decoding unit 14a that is faster, of lower quality but also lower complexity, and/or that is better suited for its denoising performances than the encoding scheme used at the main encoder engine 13a.

Fig. 5 also shows an exemplary decoder 20, which may comprise engines or functions that are similar if not identical to those comprised in the decoder 20 illustrated on Fig. 1: the decoder 20 may comprise a decoder engine 21, a grain synthesis engine 22, and a combiner engine 23 which provide functions similar if not identical to those of the corresponding engines illustrated on Fig. 1. Therefore, in some embodiments, the use at the encoder side of the proposed methods may be completely transparent for the decoder side, which may advantageously be identical to the decoder shown on Fig. 1.

In one or more embodiments, the grain parameters computation unit 12a may be configured to obtain grain parameters based on the input image data and the decoded image data, and to provide such grain parameters to the encoder 13a.

As discussed above in connection with the encoded stream generated by the encoder 13 and output from the encoder 10 illustrated by Fig. 1, the encoder engine 13a may be configured to generate an encoded stream which is output from the encoder 10a that includes grain parameters data.

Depending on the embodiment, various methods for obtaining the grain parameters may be implemented at the grain parameters computation unit 12a, which may or not involve the computation of such grain parameters or the generation of corresponding grain templates, thereby avoiding the drawbacks associated therewith. For example, in one or more embodiments, the grain parameters computation unit 12a may be configured to operate in the same manner as the grain parameters computation unit 12 of Fig. 1, except that it may be configured to operate on decoded image data instead of on denoised image data.

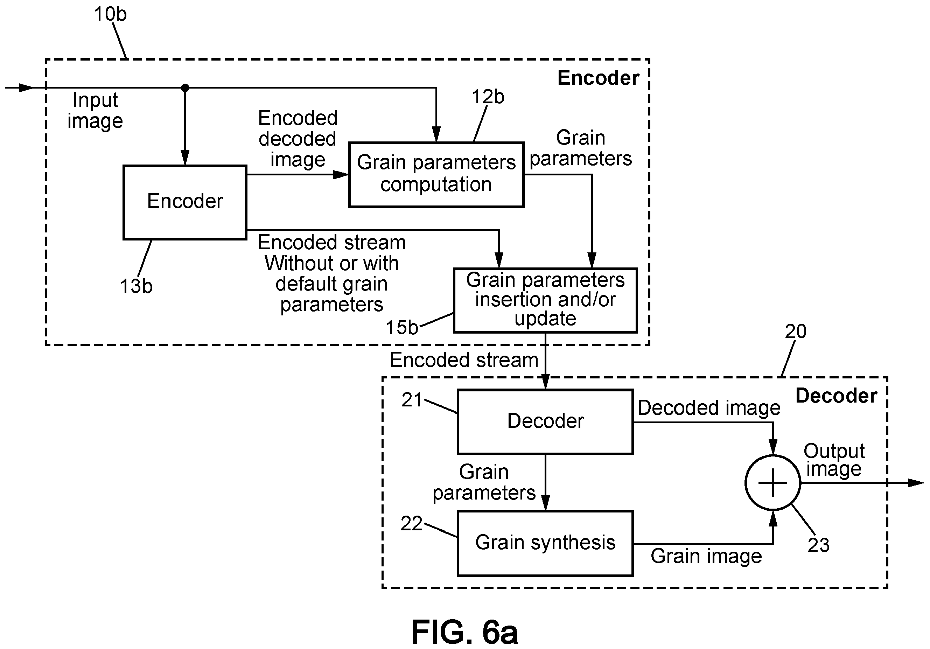

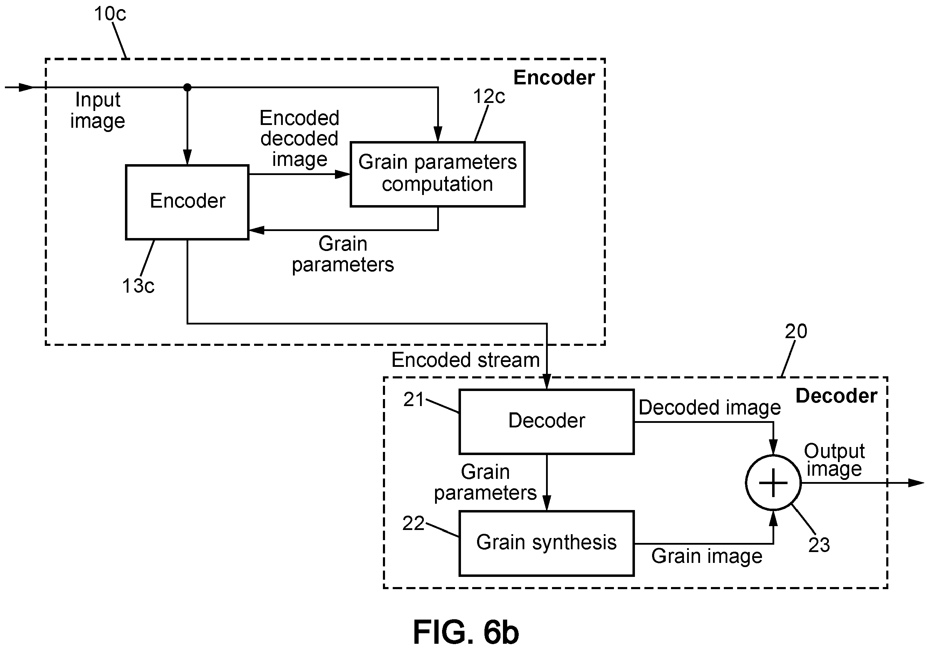

Therefore, the grain parameters computation unit of the present subject disclosure (such as shown on Figs. 5, 6a, and 6b) may in some embodiments be configured to receive as input data decoded image data and input image data and process such decoded image data and input image data according to any grain parameters computation scheme suitable for computing grain parameters based on input image data and denoised image data, such as the scheme that may be implemented by the grain parameters computation unit 12 of Fig. 1. The present subject disclosure may therefore in some embodiments advantageously not involve changes at the grain parameters computation unit beyond the configuration to receive decoded image data instead of denoised image data.

Fig. 6a shows another example of an encoder 10b configured for implementing embodiments of the proposed image processing method according to the present subject disclosure.

As shown in Fig. 6a, the improved encoder 10b may comprise engines or functions that are similar to those comprised in the encoders 10 and 10a respectively illustrated on Figures 1 and 5: the encoder 10a may comprise a grain parameters computation engine 12b which provide functions similar to those of the corresponding engines respectively illustrated on Figures 1 and 5 (except, with respect to the grain parameters computation engine 12 of Fig. 1, that the grain parameters computation engine 12b is configured to operate on decoded image data and input image data as input data instead of denoised image data and input image data). Likewise the encoder 10a of Fig. 5, in contrast to the encoder 10 of Fig. 1, the improved encoder 10b may not include a denoising engine, which can advantageously alleviate the need for a preprocessing engine at the encoder 10b for the denoising function, leading to a significant decrease in computation complexity at the encoder side. Further in contrast to the encoder 10a of Fig. 1, the encoder 10b may not comprise a distinct first encoding and decoding engine 14a. Therefore, in the encoder 10b of Fig. 6a, the preprocessing of the input image associated with the first encoding and decoding engine 14a is not used in the encoder 10b. Instead, the encoder 10b may use only one encoding processing of the input image, provided by the main encoder engine 13b of Fig. 6a, and use data generated by the encoding engine 13b during the encoding of the input image for grain parameter estimation.

The encoder 10b illustrated on Fig. 6a may therefore advantageously use the encoder engine 13b both for producing an encoded stream generated from the encoding of the input image, and for producing encoded/decoded image data which may be provided to a grain parameters computation 12b as described above in relation to the encoder 10a shown on Fig. 5.

In contrast with the encoder engine 13 of Fig. 1, the encoder engine 13b of Fig. 6a may receive input image data as input data (instead of denoised image data) and may be configured to perform the encoding of the input image, so as to produce an encoded stream.

As discussed above, the encoding of the input image may comprise decoding encoded data generated based on the input image. In one or more embodiments, the encoding of the input image performed by the encoder engine 13b may be performed according to a conventional encoding scheme which generates a decoded image based on encoded data, for example according to a standard video codec specification, such as H.261, MPEG-1 Part 2, H.262, MPEG-2 Part 2, AV1, H.264/AVC, H.265/HEVC, MPEG-4 Part 2, SHVC (Scalable HEVC), and H.266/VVC, and MPEG-5 EVC standards. Such a conventional encoding scheme may typically involve dividing the input image into a set of blocks and encoding the blocks according to a block encoding sequence. The encoding of a block may comprise the generating encoded data based on the block, for example according to a predictive coding algorithm, with the encoded data being generated based on previously encoded then decoded blocks or images. That is, in some embodiments, a decoded image resulting from the decoding of an encoded version of the input image may typically be generated as part of an encoding scheme using predictive coding implemented by the encoder engine 13b for the encoding of the input image. In the encoder 10b illustrated on Fig. 6a, such decoded image may advantageously be used not only as part of the encoding of the input image, but also for providing input data to the grain parameters computation engine 12b of Fig. 5. That is, in one or more embodiments, the encoder engine 13b of Fig. 6a may be configured for generating an encoded stream as a result of the encoding of the input image, and for generating, preferably as part of the encoding of the input image, a decoded image which results from the decoding of an encoded image generated by encoding the input image. In some embodiments, a single encoding may be performed on the input image, so that the decoded image generated by the encoder engine 13b may be generated as part of the encoding of the input image.

The use of the main encoder engine 13b advantageously reduces the complexity of the encoder 10b, as compared to the encoder 10a, at the cost of the loss in flexibility for selecting an encoding scheme for purposes of generating a decoded version of the input image that may be different from the encoding scheme used for producing the encoded stream, as discussed above.

As illustrated on Fig. 6a, the decoded image data output by the encoder engine 13b may be fed to the grain parameters computation engine 12b, in place of the denoised image output by the denoising engine 11 shown on Fig. 1. As described above with respect to the grain parameters computation engine 12a of Fig. 5, the grain parameters computation engine 12b may receive as input the decoded image data and the input image data, and may be configured to use the decoded image data to determine estimates of parameters of a parametric model of noise contained in the input image. In contrast to the encoder 10a of Fig. 5, the decoded image data inputted to the grain parameters computation engine 12b may be provided by the encoder engine 13b, instead of the first encoding and decoding engine 14a of the encoder 10a of Fig. 5.

In embodiments in which the noise model used for modelling the grain is an AR parametric model, the grain parameters data may include data corresponding to linear combination parameters ($\varphi_1$, $\varphi_2$, ..., $\varphi_P$), noise variance (or, depending on the embodiment, standard deviation) parameter ($\sigma$), and seed parameter of the AR model.

In one or more embodiments, the grain parameters computation engine 12b may perform operations that are similar to that described in relation to the grain parameters computation engine 12 of Fig. 1 or the grain parameters computation engine 12a of Fig. 5, although in contrast to the grain parameters computation engine 12 of Fig. 1, operations for determining grain parameters (according to a grain parametric model) may be performed on the decoded image data and input image data instead of on the denoised image data and input image data.

Fig. 6a also shows an exemplary decoder 20, which may comprise engines or functions that are similar if not identical to those comprised in the decoder 20 illustrated on Fig. 1: the decoder 20 may comprise a decoder engine 21, a grain synthesis engine 22, and a combiner engine 23 which provide functions similar if not identical to those of the corresponding engines illustrated on Fig. 1. Therefore, in some embodiments, the use at the encoder side of the proposed methods may be completely transparent for the decoder side, which may advantageously be identical to the decoder shown on Fig. 1.

In one or more embodiments, the grain parameters computation unit 12b may be configured to obtain grain parameters based on the input image data and the decoded image data, and to provide such grain parameters to a grain parameters insertion or update engine 15b. As illustrated by Fig. 6a, in some embodiments, the grain parameters may be computed by the grain parameters computation engine 12b, based on decoded image data provided by the encoder engine 13b. In embodiments in which the grain parameters are provided to the grain parameters insertion or update engine 15b, such grain parameters may not be fed back to the encoder engine 13b, so that the encoder engine 13b may not have grain parameters data during the encoding operations of the input image. Therefore, in some embodiments, the encoder engine 13b may be configured to include in the encoded stream some predefined grain parameters, which may be referred to herein as "default grain parameters". In other embodiments, the encoder engine 13b may be configured to produce an encoded stream which does not include grain parameters data.

The grain parameters insertion and/or update engine 15b may be configured to receive grain parameters from the grain parameters computation engine 12b, and to receive an encoded stream from the encoder engine 13b. In embodiments where the received encoded stream does not include grain parameters data, the grain parameters insertion and/or update engine 15b may further be configured to insert in the received encoded stream grain parameters data, based on the grain parameters data received from the grain parameters computation engine 12b. In embodiments where the received encoded stream includes default grain parameters data, the grain parameters insertion and/or update engine 15b may further be configured to update the default grain parameters included in the encoded stream, based on the grain parameters data received from the grain parameters computation engine 12b. Therefore, depending on whether the encoded stream includes or not grain parameters data, the grain parameters insertion and/or update engine 15b may be configured to insert and/or replace grain parameters data in the encoded stream, based on the grain parameters data received from the grain parameters computation engine 12b. As a result, in one or more embodiments, the grain parameters insertion and/or update engine 15b may be configured to generate an encoded stream output from the encoder 10b that includes grain parameters data, as discussed above in connection with the encoded stream output from the encoder 10 illustrated by Fig. 1.

Fig. 6b shows yet another example of an encoder 10c configured for implementing embodiments of the proposed image processing method according to the present subject disclosure.

As shown in Fig. 6b, the improved encoder 10c may comprise engines or functions that are similar to those comprised in the encoder 10b illustrated on Figure 6a: the encoder 10c may comprise a grain parameters computation engine 12c which provide functions similar to those of the corresponding engines respectively illustrated on Figures 1, 5, and 6a (except, with respect to the grain parameters computation engine 12 of Fig. 1, that the grain parameters computation engine 12c is configured to operate on decoded image data and input image data as input data instead of denoised image data and input image data). Likewise the encoders 10a and 10b of Figs. 5 and 6a, in contrast to the encoder 10 of Fig. 1, the improved encoder 10c may not include a denoising engine, which can advantageously alleviate the need for a preprocessing engine at the encoder 10c for the denoising function, leading to a significant decrease in computation complexity at the encoder side. Further in contrast to the encoder 10a of Fig. 5, the encoder 10c may not comprise a distinct first encoding and decoding engine 14a. Therefore, in the encoder 10c of Fig. 6b, the preprocessing of the input image associated with the first encoding and decoding engine 14a is not used in the encoder 10c. Instead, the encoder 10c may use only one encoding processing of the input image, provided by the main encoder engine 13c of Fig. 6b, and use data generated by the encoding engine 13c during the encoding of the input image for grain parameter estimation.

The encoder 10c illustrated on Fig. 6b may therefore advantageously use the encoder engine 13c both for producing an encoded stream generated from the encoding of the input image, and for producing encoded/decoded image data which may be provided to the grain parameters computation 12c as described above in relation to the encoders 10a and 10b respectively shown on Figs. 5 and 6a.

In contrast with the encoder engine 13 of Fig. 1, the encoder engine 13c of Fig. 6b may receive input image data as input data (instead of denoised image data) and may be configured to perform the encoding of the input image, so as to produce an encoded stream.

As discussed above, the encoding of the input image may comprise decoding encoded data generated based on the input image. In one or more embodiments, the encoding of the input image performed by the encoder engine 13c may be performed according to a conventional encoding scheme which generates a decoded image based on encoded data, for example according to a standard video codec specification, such as H.261, MPEG-1 Part 2, H.262, MPEG-2 Part 2, AV1, H.264/AVC, H.265/HEVC, MPEG-4 Part 2, SHVC (Scalable HEVC), and H.266/VVC, and MPEG-5 EVC standards. Such a conventional encoding scheme may typically involve dividing the input image into a set of blocks and encoding the blocks according to a block encoding sequence. The encoding of a block may comprise the generating encoded data based on the block, for example according to a predictive coding algorithm, with the encoded data being generated based on previously encoded then decoded blocks or images. That is, in some embodiments, a decoded image resulting from the decoding of an encoded version of the input image may typically be generated as part of an encoding scheme using predictive coding implemented by the encoder engine 13c for the encoding of the input image. In the encoder 10c illustrated on Fig. 6b, such decoded image may advantageously be used not only as part of the encoding of the input image, but also for providing input data to the grain parameters computation engine 12c of Fig. 6b. That is, in one or more embodiments, the encoder engine 13c of Fig. 6b may be configured for generating an encoded stream as a result of the encoding of the input image, and for generating, preferably as part of the encoding of the input image, a decoded image which results from the decoding of an encoded image generated by encoding the input image. In some embodiments, a single encoding may be performed on the input image, so that the decoded image generated by the encoder engine 13c may be generated as part of the encoding of the input image.

The use of the main encoder engine 13c advantageously reduces the complexity of the encoder 10c, as compared to the encoder 10a, at the cost of the loss in flexibility for selecting an encoding scheme for purposes of generating a decoded version of the input image that may be different from the encoding scheme used for producing the encoded stream, as discussed above. The use of the main encoder engine 13c also advantageously reduces the complexity of the encoder 10c, as compared to the encoder 10b, in view of the absence of a grain parameters insertion and/or update unit at the encoder 10c, and the fact that no default grain parameters may be needed at the encoder 10c.

As illustrated on Fig. 6b, the decoded image data output by the encoder engine 13c may be fed to the grain parameters computation engine 12c, in place of the denoised image output by the denoising engine 11 shown on Fig. 1. As described above with respect to the grain parameters computation engine 12a of Fig. 5 and 12b of Fig. 6a, the grain parameters computation engine 12c may receive as input the decoded image data and the input image data, and may be configured to use the decoded image data to determine estimates of parameters of a parametric model of noise contained in the input image. In contrast to the encoder 10a of Fig. 5, the decoded image data inputted to the grain parameters computation engine 12c may be provided by the encoder engine 13c, instead of the first encoding and decoding engine 14a of the encoder 10a of Fig. 5.

In embodiments in which the noise model used for modelling the grain is an AR parametric model, the grain parameters data may include data corresponding to linear combination parameters ($\varphi_1$, $\varphi_2$, ..., $\varphi_P$), noise variance (or, depending on the embodiment, standard deviation) parameter ($\sigma$), and seed parameter of the AR model.

In one or more embodiments, the grain parameters computation engine 12c may perform operations that are similar to that described in relation to the grain parameters computation engine 12 of Fig. 1 or the grain parameters computation engines 12a of Fig. 5 and 12b of Fig. 6, although in contrast to the grain parameters computation engine 12 of Fig. 1, operations for determining grain parameters (according to a grain parametric model) may be performed on the decoded image data and input image data instead of on the denoised image data and input image data.

Fig. 6b also shows an exemplary decoder 20, which may comprise engines or functions that are similar if not identical to those comprised in the decoder 20 illustrated on Fig. 1: the decoder 20 may comprise a decoder engine 21, a grain synthesis engine 22, and a combiner engine 23 which provide functions similar if not identical to those of the corresponding engines illustrated on Fig. 1. Therefore, in some embodiments, the use at the encoder side of the proposed methods may be completely transparent for the decoder side, which may advantageously be identical to the decoder shown on Fig. 1.

In one or more embodiments, and in contrast with the encoder 10b of Fig. 6a, the grain parameters computation unit 12c of Fig. 6b may be configured to obtain grain parameters based on the input image data and the decoded image data, and to provide such grain parameters to the encoder unit 13c. As illustrated by Fig. 6b, in some embodiments, the grain parameters may be computed by the grain parameters computation engine 12c, based on decoded image data provided by the encoder engine 13c, and fed back to the encoder engine 13c, so that the encoder engine 13c may advantageously have grain parameters data during the encoding operations of the input image. The encoder engine 13c may therefore be configured to generate as output data an encoded stream which includes grain parameters data, as discussed above in connection with the encoded stream output from the encoder 10 illustrated by Fig. 1, which encoded stream may advantageously be used as output data of the encoder 10c. The encoder engine 13c may be configured to insert grain parameters data in the generated encoded stream, based on grain parameters received from the grain parameters computation unit 12c.

The use of the main encoder engine 13c also advantageously reduces the complexity of the encoder 10c, as compared to the encoder 10b, in view of the absence of a grain parameters insertion and/or update unit at the encoder 10c, and the fact that no default grain parameters may be needed at the encoder unit 13c.

Therefore, in one or more embodiments (such as illustrated by Figure 6b), a grain parameters computation engine 12c similar to the grain parameters computation engine 12b of Fig. 6a may be configured to compute grain parameters, based at least in part on decoded image data received from an encoder engine configured for encoding input image data such as the encoder engine 13b of Fig. 6, and to feed-back grain parameters data to the encoder engine. As illustrated on Figs. 5 and 6a which show an encoder engine (13a, 13b) configured for producing an encoded stream based on an input image and received grain parameters, the encoder engine may in such embodiments be configured to produce an encoded stream (which is output from the encoder) based on input image data and grain parameters data received from the grain parameters computation engine to which it provided decoded image data. Such alternative embodiments advantageously allow avoiding the need for the grain parameters insertion and/or update engine and operations associated therewith, in particular by using in some embodiments an encoder engine which may not depart as much from the conventional encoder engine 13 of Figure 1.

The proposed schemes, for example according to the embodiments illustrated by Figures 5, 6a and 6b, advantageously provide that instead of trying to model the noise (e.g. grain) contained in the input image, it may be advantageous to model the part of the grain which cannot be conveyed by the encoder. Advantageously, the proposed scheme provides a mix of synthesized and encoded grain, which leads to a higher fidelity of the grain restitution.

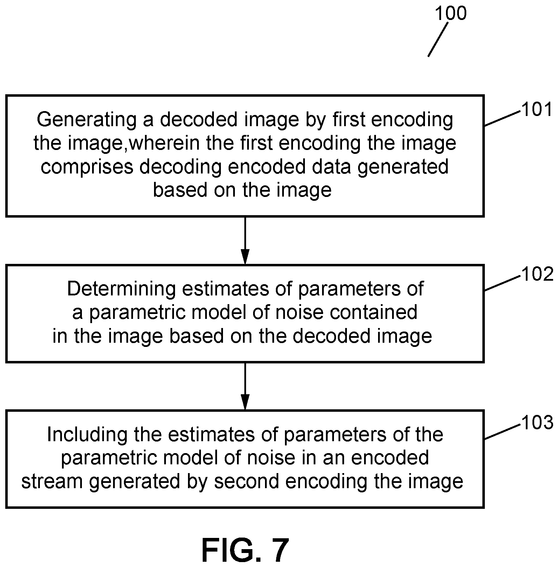

Figure 7 illustrates an exemplary image processing method 100 according to one or more embodiments of the present subject disclosure.

An image which is to be processed (e.g. encoded) for noise analysis (e.g. grain analysis), for example of a video sequence or more generally of a media stream (an image of a video sequence may sometimes be referred to as a "video frame"), is considered as input of the proposed process, and may be indifferently referred to in the following as the "original" image or the "input" image.

As shown on Fig. 7, in some embodiments a decoded image may be generated 101 by first encoding the input image. The first encoding the input image may comprise decoding encoded data generated based on the input image, so that the decoded image may be generated based on the decoding of such encoded data.

In one or more embodiments, the decoded image may be used for determining 102 estimates of parameters of a parametric model of noise contained in the input image. Using a decoded image obtained during encoding of the input image, instead of a denoised image, for determining estimates of noise model parameters advantageously avoids the drawbacks associated with the denoising processing of the input image, including the ones discussed above.

The determined estimates of parameters of noise model may then be included 103 in an encoded stream generated by second encoding of the image.

In some embodiments, the parametric model may be chosen to model grain contained in the input image, in which case the proposed scheme may advantageously be used to process grain. For example, as discussed above, an AR parametric model may be chosen for its suitability to model grain contained in an image.

In some embodiments, the second encoding may comply with any image and/or video coding standard. For example, the second encoding may be performed according to an AV1 or AVC/H.264 encoding. In such embodiments, the proposed scheme may advantageously allow using a standard video codec as specified, and therefore be backward compatible with existing video coders. The second encoding may be performed by an encoder which is distinct from the encoder performing the first encoding, in which cases the proposed scheme may impact the first encoding, while the second encoding is chosen based on encoding constraints, for example as a standard video codec.

In some embodiments, the including the estimates of parameters of the parametric model of noise in the encoded stream may be performed as part of the second encoding of the image. In particular, an encoder engine configured for performing the second encoding of the image may be configured for generating, based on input image data and noise parameters data, an encoded stream as part of the encoding of the input image.

In some embodiments, the second encoding may be performed according to encoding parameters that are different from the encoding parameters according to which the first encoding is performed. For example, as illustrated by the example encoder of Fig. 5, an encoder implementing some embodiments of the present subject disclosure may comprise two distinct encoder engines, including a first encoder engine configured to performed the first encoding for generating the decoded image, and a second encoder engine configured to performed the second encoding for generating the encoded stream based on the input image. The first and second encoder engines may use different encoding parameters. For example, the first encoder may use encoding parameters which provide a faster encoding or lower complexity encoding as compared to the encoding parameters used by the second encoder. In addition, in some embodiments, the first encoder and second encoder engines may be separate, in that the first encoding and the second encoding may be performed as part of different encoding processing instances. Depending on the embodiment, the first encoding processing instance and the second encoding processing instance may be run, in full or in part, in parallel.

In other embodiments, the second encoding may be performed according to encoding parameters that are the same as encoding parameters according to which the first encoding is performed. For example, as illustrated by the example encoder of Fig. 6, an encoder implementing some embodiments of the present subject disclosure may comprise a same encoder engine for purposes of both generating the decoded image and generating the encoded stream based on the input image. In one or more embodiments, the first encoding and the second encoding may be performed as part of a same encoding processing instance. In such embodiments, the decoded image and the encoded stream may be generated as part of the same encoding processing instance. In such cases, the encoding of the input image may be performed by an encoder configured to output the encoded stream further to the encoding of the image and to output the decoded image further to the encoding of the input image.

In one or more embodiments, the estimates of parameters of the parametric model of noise may be inserted in the encoded stream. This is advantageous in the cases where a single encoder is used to generate the decoded image and to generate the encoded stream, and the encoded stream generated by the encoder does not include noise parameters data.

In other embodiments, the estimates of parameters of the parametric model of noise may be used to update default noise parameters comprised in the encoded stream. This is advantageous in the cases where a single encoder is used to generate the decoded image and to generate the encoded stream, and the encoded stream generated by the encoder includes noise parameters data which however needs updating in order to take into account the determined estimates of parameters of the parametric model of noise.

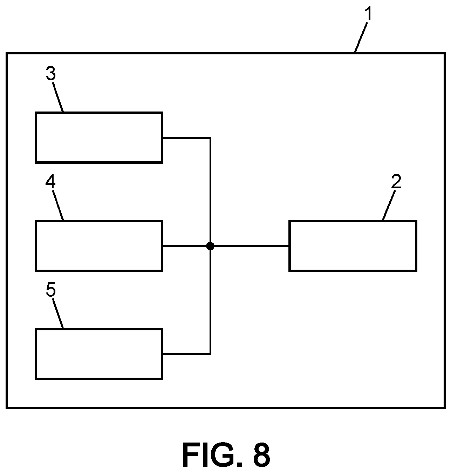

An exemplary architecture of an apparatus, such as a processing node or a video encoder, according to the present subject disclosure is illustrated on Fig. 8 which shows an apparatus 1 configured to perform a method for processing an image in accordance with embodiments of the present subject disclosure.

The apparatus 1, which may comprise one or more computers, includes a control engine 2, an image processing engine 3, a data interface engine 4, and a memory 5.

In the architecture illustrated on Fig. 8, all of the image processing engine 3, data interface engine 4, and memory 5 are operatively coupled with one another through the control engine 2.

In some embodiments, the image processing engine 3 is configured to perform various aspects of embodiments of one or more of the proposed methods for image processing as described herein, such as determining noise parameters related to a received input image, and generating an encoded stream based on the input image. Depending on the embodiment, the image processing engine 3 may be configured to include a representative encoder 10a, 10b such as illustrated on Figs. 5 , 6a and 6b.

In one or more embodiments, the image processing engine 3 may comprise an encoder engine and a noise parameters computation engine, with the encoder engine configured to perform the first encoding and the second encoding described above as part of a same encoding processing instance for encoding an input image, and the encoder engine being further configured to output the encoded stream as part of the encoding processing instance, and to output the decoded image to the noise parameters computation engine as part of the encoding processing instance. The noise parameters computation engine may be configured to determine the estimates of parameters of the parametric model of noise contained in the image based on the decoded image as described above.

For example, in some embodiments, the image processing engine 3 may comprise a first encoding and decoding engine, a noise parameters computation engine, and an encoder engine configured as described above in connection with the encoder 10a of Fig. 5.

In other embodiments, the image processing engine 3 may comprise an encoder engine, a noise parameters computation engine, and a noise parameters insertion and/or update engine configured as described above in connection with the encoder 10b of Fig. 6a. In such embodiments, the encoder engine may be configured to perform a first encoding and a second encoding according to above-described embodiments of the proposed method as part of a same encoding processing instance for encoding the image. In some embodiments, the encoder engine may further be configured to generate and output an encoded stream further to the encoding of an input image and to generate and output a decoded image to the noise parameters computation engine. The noise parameters insertion and/or update engine may be operatively coupled with the encoder engine and the noise parameters computation engine, and configured to receive from the encoder engine the encoded stream, receive from the noise parameters computation engine the estimates of parameters of the parametric model of noise contained in the image, and include in the encoded stream received from the encoder engine the estimates of parameters of the parametric model of noise contained in the image received from the noise parameters computation engine, in order to generate an encoded stream output from the apparatus 1.

In yet other embodiments, the image processing engine 3 may comprise an encoder engine, a noise parameters computation engine configured as described above in connection with the encoder 10c of Fig. 6b. In such embodiments, the encoder engine may also be configured to perform a first encoding and a second encoding according to above-described embodiments of the proposed method as part of a same encoding processing instance for encoding the image. In some embodiments, the encoder engine may further be configured to generate and output an encoded stream further to the encoding of an input image and to generate and output a decoded image to the noise parameters computation engine. The noise parameters computation engine may be configured to output the estimates of parameters of the parametric model of noise contained in the image to the encoder engine, and the encoder engine may be configured to include in the encoded stream the estimates of parameters of the parametric model of noise contained in the image received from the noise parameters computation engine, in order to generate an encoded stream output from the apparatus 1.

In particular, in some embodiments, the image processing engine 3 may comprise an encoder engine configured to perform a first encoding and a second encoding according to embodiments of the proposed method as part of a same encoding processing instance for encoding the image. In some embodiments, the encoder engine may further be configured to generate and output an encoded stream further to the encoding of an input image and to generate and output a decoded image further to the encoding of the input image.

In some embodiments, the data interface engine 4 is configured to receive an input image, possibly as part of an input video data, and to output an encoded stream, under the control of the image processing engine 3.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage or computer storage medium, coupled to the control engine 2 and operable with the data interface engine 4 and the image processing engine 3 to facilitate management of data stored in association therewith, such as, for example, a cache memory, a data farm, a data warehouse, a data mart, a datacenter, a data cloud, or a combination thereof.

In embodiments of the present subject disclosure, the apparatus 1 is configured for performing one or more of the image processing methods described herein. The apparatus 1 may in some embodiments be included in an image encoder or, depending on the embodiments, in a video encoder or a video codec.

It will be appreciated that the apparatus 1 shown and described with reference to Fig. 8 is provided by way of example only. Numerous other architectures, operating environments, and configurations are possible. Other embodiments of the node may include fewer or greater number of components and may incorporate some or all of the functionality described with respect to the apparatus components shown in Fig. 8. Accordingly, although the control engine 2, image processing engine 3, data interface engine 4, and memory 5 are illustrated as part of the apparatus 1, no restrictions are placed on the location and control of components 2 - 5. In particular, in other embodiments, any of components 2 - 5 may be part of different entities or computing systems.

The proposed method may be used for the processing, for purposes of encoding or compression of input data which may correspond, depending on the embodiment, to an image, a picture, a video frame, or video data.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A method of processing an image, comprising:

    • generating a decoded image by first encoding the image, wherein the first encoding the image comprises decoding encoded data generated based on the image;
    • determining estimates of parameters of a parametric model of noise contained in the image based on the decoded image;
    • including the estimates of parameters of the parametric model of noise in an encoded stream generated by second encoding the image.

**2.** The method according to claim 1, wherein the including the estimates of parameters of the parametric model of noise in the encoded stream comprises: inserting the estimates of parameters of the parametric model of noise in the encoded stream.

**3.** The method according to claim 1, wherein the including the estimates of parameters of the parametric model of noise in the encoded stream comprises: updating default noise parameters comprised in the encoded stream.

**4.** The method according to claim 1, wherein the including the estimates of parameters of the parametric model of noise in the encoded stream is performed as part of the second encoding of the image.

**5.** The method according to any of claims 1 and 4, wherein the second encoding is performed according to encoding parameters that are different from the encoding parameters according to which the first encoding is performed.

**6.** The method according to any of the preceding claims, wherein the first encoding and the second encoding are performed as part of different encoding processing instances.

**7.** The method according to any of claims 1 - 3, wherein the first encoding and the second encoding are performed as part of a same encoding processing instance.

**8.** The method according to any of the preceding claims, wherein the parametric model is configured to model grain contained in the image.

**9.** The method according to any of the preceding claims, wherein the second encoding is performed according to an AV1 or AVC/H.264 encoding.

**10.** An apparatus, the apparatus comprising a processor and a memory operatively coupled to the processor, wherein the apparatus is configured to perform a method according to any of claims 1 to 9.

**11.** The apparatus according to claim 10, further comprising an encoder engine and a noise parameters computation engine, wherein the encoder engine is configured to perform the first encoding and the second encoding as part of a same encoding processing instance for encoding the image, wherein the encoder engine is further configured to output the encoded stream as part of the encoding processing instance and to output the decoded image to the noise parameters computation engine as part of the encoding processing instance, wherein the noise parameters computation engine is configured to determine the estimates of parameters of the parametric model of noise contained in the image based on the decoded image.

**12.** The apparatus according to claim 11, further comprising a noise parameters insertion and/or update engine operatively coupled with the encoder engine and the noise parameters computation engine, and configured to include in the encoded stream received from the encoder engine the estimates of parameters of the parametric model of noise contained in the image received from the noise parameters computation engine.

**13.** The apparatus according to claim 11, wherein the noise parameters computation engine is configured to output the estimates of parameters of the parametric model of noise contained in the image to the encoder engine, and the encoder engine is configured to include in the encoded stream the estimates of parameters of the parametric model of noise contained in the image received from the noise parameters computation engine.

**14.** A video encoder, configured to encode video content comprising a plurality of images, the video encoder comprising an apparatus according to any of claims 10 to 13 configured to process images of the plurality of images.

**15.** A computer program product comprising computer program code tangibly embodied in a computer readable medium, said computer program code comprising instructions to, when provided to a computer system and executed, cause said computer to perform a method according to any of claims 1 to 9.

FIG. 1

| | | | | |
|---|---|---|---|---|
| $X_{i-2, j-2}$ | $X_{i-2, j-1}$ | $X_{i-2, j}$ | $X_{i-2, j+1}$ | $X_{i-2, j+2}$ |
| $X_{i-1, j-2}$ | $X_{i-1, j-1}$ | $X_{i-1, j}$ | $X_{i-1, j+1}$ | $X_{i-1, j+2}$ |
| $X_{i, j-2}$ | $X_{i, j-1}$ | $X_{i, j}$ | | |

## FIG. 2

## FIG. 3

Noise template,
generated pixels

| $X_{i-3,\,j-3}$ | $X_{i-3,\,j-2}$ | $X_{i-3,\,j-1}$ | $X_{i-3,\,j}$ | $X_{i-3,\,j+1}$ | $X_{i-3,\,j+2}$ | $X_{i-3,\,j+3}$ |
|---|---|---|---|---|---|---|
| $X_{i-2,\,j-3}$ | $X_{i-2,\,j-2}$ | $X_{i-2,\,j-1}$ | $X_{i-2,\,j}$ | $X_{i-2,\,j+1}$ | $X_{i-2,\,j+2}$ | $X_{i-2,\,j+3}$ |
| $X_{i-1,\,j-3}$ | $X_{i-1,\,j-2}$ | $X_{i-1,\,j-1}$ | $X_{i-1,\,j}$ | $X_{i-1,\,j+1}$ | $X_{i-1,\,j+2}$ | $X_{i-1,\,j+3}$ |
| $X_{i,\,j-3}$ | $X_{i,\,j-2}$ | $X_{i,\,j-1}$ | $X_{i,\,j}$ (Current pixel) | | | |

Raster scan

Noise template, not
yet generated pixels

**FIG. 4**

FIG. 5

FIG. 6a

**FIG. 6b**

100

101

Generating a decoded image by first encoding
the image,wherein the first encoding the image
comprises decoding encoded data generated
based on the image

102

Determining estimates of parameters of
a parametric model of noise contained
in the image based on the decoded image

103

Including the estimates of parameters of the
parametric model of noise in an encoded
stream generated by second encoding the image

## FIG. 7

FIG. 8

**EP 4 017 011 A1**

Europäisches Patentamt
European Patent Office
Office européen des brevets

# EUROPEAN SEARCH REPORT

Application Number

EP 20 30 6569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GOMILA C ET AL: "SEI message for film grain encoding", JOINT VIDEO TEAM (JVT) OF ISO/IEC MPEG & ITU-T VCEG(ISO/IEC JTC1/SC29/WG11 AND ITU-T SG16 Q6), 23 May 2003 (2003-05-23), pages 1-14, XP002314774, * the whole document * | 1-15 | INV. H04N19/615 H04N19/625 H04N19/80 H04N19/85 |
| X | JINGJING DAI ET AL: "Film grain noise removal and synthesis in video coding", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 890-893, XP031697220, ISBN: 978-1-4244-4295-9 * the whole document * | 1-15 | |
| X | KADONO: "Film Grain Coding in H.264/AVC", 9. JVT MEETING; 02-09-2003 - 05-09-2003; SAN DIEGO, US; (JOINT VIDEOTEAM OF ISO/IEC JTC1/SC29/WG11 AND ITU-T SG.16), no. JVT-I034, 5 September 2003 (2003-09-05), XP030005771, * the whole document * | 1-15 | TECHNICAL FIELDS SEARCHED (IPC) H04N |
| X | NORKIN ANDREY ET AL: "Film Grain Synthesis for AV1 Video Codec", 2018 DATA COMPRESSION CONFERENCE, IEEE, 27 March 2018 (2018-03-27), pages 3-12, XP033376037, DOI: 10.1109/DCC.2018.00008 [retrieved on 2018-07-19] * the whole document * | 1-15 | |

The present search report has been drawn up for all claims

| Place of search | Date of completion of the search | Examiner |
|---|---|---|
| Munich | 30 March 2021 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)